# EUROPEAN PATENT APPLICATION

(11) **EP 4 283 499 A1**
(43) Date of publication of application: **29.11.2023**
(21) Application number: 22175043.3
(22) Date of filing: 24.05.2022
(51) Int. Cl.: G06F 21/32, G07C 9/25, H04L 9/40, H04W 12/40, G06F 21/35

(54) **DATA BASE TERMINATOR**

(71) Applicant: Adelaide, Vidal, 1495-740 Dafundo Cruz Quebrada (PT)
(72) Inventor: Adelaide, Vidal, 1495-740 Dafundo Cruz Quebrada (PT)

(57) **Abstract**

**DBT - Data base terminator is an invention to avoid the need for internet and biometric central databases to validate biometric Identity.**

ABSTRACT; DBT is an invention for automatic biometric Identity Identification, hands free, offline, to facilitating access control to sensitive locations, Premises and computer systems without the need to access databases public or Private. The innovation and uniqueness of this solution is that the biometric information of the user is custodied by the user all the time. A DBT client application installed in a wireless device held by the user, stores all the biometric data necessary for a biometric identification. Thus the validation process is done hands free automatically without need of :
• Internet access.
• Access to external databases.
• Biometric Identity validation done totally hands free, off line.

The DBT uses three components:
● A client application, DBT Client, that the user can download from any Appstore google Play to his/her computer or wireless Watch/Phone device .
● A server application, DBT Server, that detects the presence of the user, establish a secure VPN communication and checks user stored biometric data with biometrics captured.
● A Digital Token ID containing user's encrypted biometric Data that is used to match captured user's biometric data.

**When User Cell Phone with a client DBT application, enters in the DBT Server field of Action the following sequence of events happen:**
**1. User Cell DBT client is controlled if it is as an authorized member.**
**2. If it's an authorized DBT member a challenge ID Protocol (VPN) is established between Cell phone DBT client app and Access control DBT Server app.**
**3. User Cell DBT Client app is validated, and a VPN secure communication is established.**
**4. DBT Server asks DBT Client to identify user holder.**
**5. DBT Client app in the Citizen Cell Phone sends the ID HashTag template of user's biometrics data (Face, Finger, others) to the DBT server Totem.**
**6. DBT Server totem Activates camera or other biometric scanner to capture User biometrics.**
**7. Biometric match is processed with user biometric ID HashTag.**
**8. If Match is Ok User ID is validated and access is granted.**

## Description

### How DBT WORKS:

### DBT Unique Advantages:

Unique solution for standalone Biometric ID Validation.
- Works OFF LINE.
- No need to Access external Data Base.
- No need of Internet Access.
- Citizen Biometric Data is encrypted and in possession and control of the citizen in his/her smartphone.

The system consists in two DBT applications; a server application installed in the access Totem, and a Client application installed in the user citizen smartphone.

When User Cell Phone with a client DBT application, enters in the DBT Server field of Action the following sequence of events happen:
1. User Cell DBT client is controlled to check if it is as an authorized member.
2. If it's an authorized DBT member a challenge ID Protocol (VPN) is established between Cell phone DBT client app and Access control DBT Server app.
3. User Cell DBT Client app is validated, and a VPN secure communication is established.
4. DBT Server asks DBT Client to identify user holder.
5. DBT Client app in the Citizen Cell Phone sends the ID HashTag template of user's biometrics data (Face, Finger, others) to the DBT server Totem.
6. DBT Server totem Activates camera or other biometric scanner to capture User biometrics.
7. Biometric match is processed with user biometric ID HashTag.
8. If Match is Ok User ID is validated and access is granted.

### REGISTERING IN THE DBT PLATFORM.

DBT- is the right technology to handle Citizen sensitive data respecting Legislation and protecting civil rights.

Citizen DBT users have to register as DBT members, for that they have to go through an identification process the first time they use the system.

This process can be done automatically without need of human intervention, in case the identification is not sensitive (example renting a bicycle, register in a library), or register can be done with a human control when access is required to critic /sensitive access's like accessing a plane, accessing government web services or security premises.

### Automatic identification process.

This can be done easily from home or using a mobile phone, a tablet or a desktop.
- Users download the DBT app from windows or from Google/Apple store for Android/IOS systems.
- The App invites the user to fill form and accept terms and conditions.
- The App Invites the user to take a photo from his ID valid document.
- The App invites user to make a selfie.
- The DBT app locally check that the information in the ID document is correct and the selfie match with the photo in the document.
- If the information is correct, an ID HashTag is generated and stored in the cell phone.

### Human Assisted Identification Process.

- Users download the DBT app from windows or from Google/Apple store for Android/IOS systems.
- The App invites the user to fill form and accept terms and conditions.
- The App Invites the user to take a photo from his ID valid document.
- The App invites user to make a selfie.
- The DBT app encrypts and stream the information captured of the user to the DBT Back Office where trained officers analyze all the information and approve or deny remote Register of user in the DBT platform.
- Denied users are invited to register in any DBT unassisted Kiosk or DBT help desk to complete and validate registration in the DBT platform.
- When registered, an ID HashTag is generated and stored in the cell phone. All the information sent to the Back office is erased and deleted after conclusion of the identification process.

### Hybrid Identification Process

This process is a mix of the two previous process's described previously, the user starts the process in remote mode, nevertheless the document ID and the biometric validation are done in an external DBT kiosk.
- User download the DBT app from windows or Google/Apple store for Android/IOS systems.
- The App invites the user to fill form and accept terms and conditions.
- Invite the user to take a photo from his ID valid document.
- To take a selfie.
- At this point the app shows in the display the sigh HYBRID as an option.
- At any time user click Hybrid the system generate a QR and invite the user to visit a DBT Kiosk to finish the register.

### At the unassisted KIOSK.

- User display the QR generated by the hybrid DBT app to be read by the kiosk reader.
- User is identified and is asked to place the ID document in the kiosk reader.
- User is invited to take a photo or have his IRIS read or to scan fingerprints
- The user information is locally controlled
- If the information is valid an ID HashTag is generated and transmitted to be stored in the user cell phone DBT app.

This process is only necessary the first time users use the DBT, following uses are done automatically with the ID HashTag stored in the mobile phone.

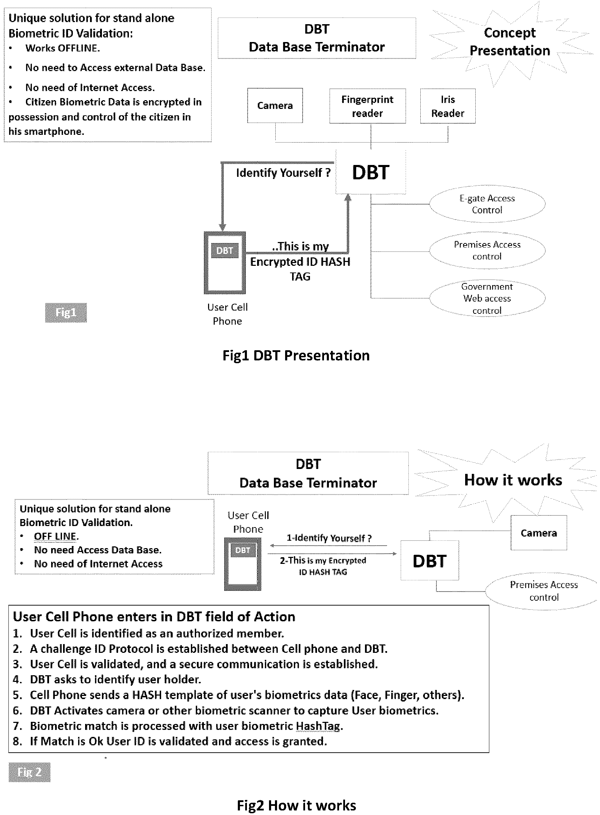

### FIG1 DBT PRESENTATION

Basically, the originality of this invention is to keeping an encrypted tag with the biometric template minutiae's of the citizen in a smartphone. Each time user is required to validate his identity, a photo of the user or the fingerprints of the user are compared with the unique ID Hashtag of the user and if the match is conclusive the ID of the citizen is validated.

Very important: all the Citizen sensitive biometric data is encrypted and stored in the User smartphone/cell Phone. The identity is validated with the ID HashTag template stored in the smartphone. No need for internet access, no need of Central biometrics Data base servers or to access external systems to validate citizen identity **thus the all process IS DONE OFFLINE.**

### So this is why DBT is a unique solution for stand Alone Identity Biometric Validation:

- Works OFF LINE
- NO need to access biometric I Databases.
- NO need of internet access

### FIG2 HOW IT WORKS

With DBT, Citizens are not required to show their ID document and Access controller don't have to worry about limitations and weakness of old ID documents, forged documents or look alike phot IDs documents.

DBT system assures 99,99% of effectiveness and reliability to control in a fast way using multimodal BIOMTRIC ID VALIDATION process.

To use this high effective access control system, users only need to keep DBT activated in the cell Phone. Each time user enters in the field of control of a DBT access system a DBT server recognizes the DBT client app in the user cell phone and establish a secure communication that allow the user to access; a plane or o enter in the premise he wants to access without taking hands out of his pocket.

### When User Cell Phone enters in DBT field of Action

1. **User Cell is identified as an authorized member.**
2. **A challenge ID Protocol is established between Cell phone and DBT.**
3. **User Cell is validated, and a secure communication is established.**
4. **DBT asks to identify user holder.**
5. **Cell Phone sends an ID HASHTAG template of user's biometrics data (Face, Finger, others).**
6. **DBT Activates camera or other biometric scanner to capture User biometrics.**
7. **Biometric match is processed with user biometric ID HashTag.**
8. **If Match is Ok User ID is validated and access is granted or denied if no conclusive match is done.**

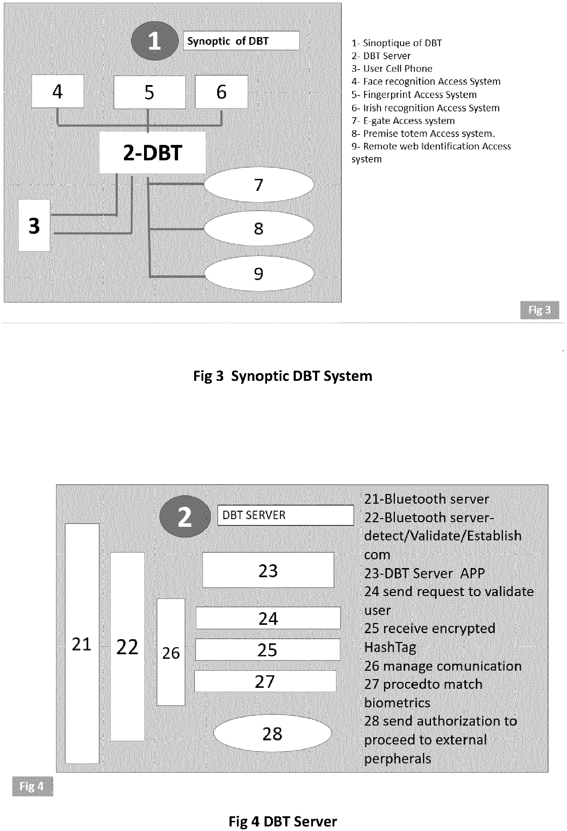

### FIG 3 SYNOPTIC DBT SYSTEM

### 1- Synoptic of DBT

### 2- DBT Server

DBT Server is the main application it can be offered as a software application to run in a desk computer or any windows computer system, or delivered as standalone hardware unit that can be connected to the USB of input devices (4-5-6) and output devices (7-8-9). The hardware unit or the desktop running the DBT APP need to have a Bluetooth connection to communicate with the DBT Client unit (3) a cell phone unit; android, IOS or Haiwei.

Th DBT server can be in standby in scanning mode or start scanning when a user is detected by the access unit example the sensors of an e-gate.

When DBT servers detects the presence of a client DBT an identification process starts as described in Fig 2.

### 3- User Cell Phone

The user Cell phone can be any smartphone with Bluetooth system and a DBT app running. The activation of DBT client is only possible by the user anytime he/she wants to facilitate access to services using his ID HashTag.

After being registered in the system the identity of the user is converted in an unique sequence of characters unique to each person that is in possession of the user and can be displayed only by the user cell phone for a 1:1 ID verification.

### 4- Face recognition Access System

The user approaches an access control, if he wants to grant access he has to keep is DBT client app activated and look to the camera; a verification match 1:1 is automatically processed between the user image captured by the camera and the ID HashTag stored in the user smartphone, if the match is positive access is granted.

### 5- Fingerprint Access System

The user approaches an access control, if he wants to grant access he has to keep is DBT client app activated and put his finger(s) in the fingerprint reader; a verification match 1:1 is automatically processed between the user fingerprints captured by the reader camera and the ID HashTAg stored in the user smartphone if the match is positive access is granted.

### 6 - Irish recognition Access System

The user approaches an access control, if he wants to grant access he has to keep is DBT client app activated and look to the iris scan; a verification match 1:1 is automatically processed between the user Iris image captured by the Iris Scan and the ID HashTag stored in the user smartphone if the match is positive access is granted.

### 7- E-gate Access systems, 8- Premise totem Access system, 9- Remote web Identification.

The results of the match processed in the DBT server are conveyed to the Access Systems in use, if Match is positive access is granted with a welcome display or green lamp sign, however if the match is not compliant different type of information's or actions can be displayed/ done depending of the type access in use.

### FIG 4 DBT SERVER

21- Bluetooth server module, the communication between Server DBT and client DBT is done using Bluetooth profile DBT and Bluetooth BLE. Bluetooth BLE is used by DBT server and DBT client to detect each other, Bluetooth DBT is used to establish a secure communication and receive the ID HashTag.

22 - this Module tasks are:
- To validate the client, if the client is authorized to access the specific control unit.
- To establish a secure communication Channel type VPN, between server and client.
- To request the ID HashTag of the client.
- To return to the client authorization/Denial to access the control unit

23 - DBT Server APP, this is the core app of the DBT Server; processing inputs, processing outputs related with the DBT, like the image of the biometric captured and its conversion in an HASHTAG mirror to be used to match with the ID HashTag received from the DBT client smartphone.

24 - Module managing the secure communication with the DBT client to confirm that the client User ID is entitled to this specific access

25 - 26 Modules receiving and controlling the ID HASHTAG of the client DBT.

27 - Module with the Match algorithm used for match validation.

28 - Module in charge for the communication with external devices and business rules defined for each type of situation; Authorization/ Denial/ error in the HashTag/ error in Captured Hash Tag/ Change seat etc..

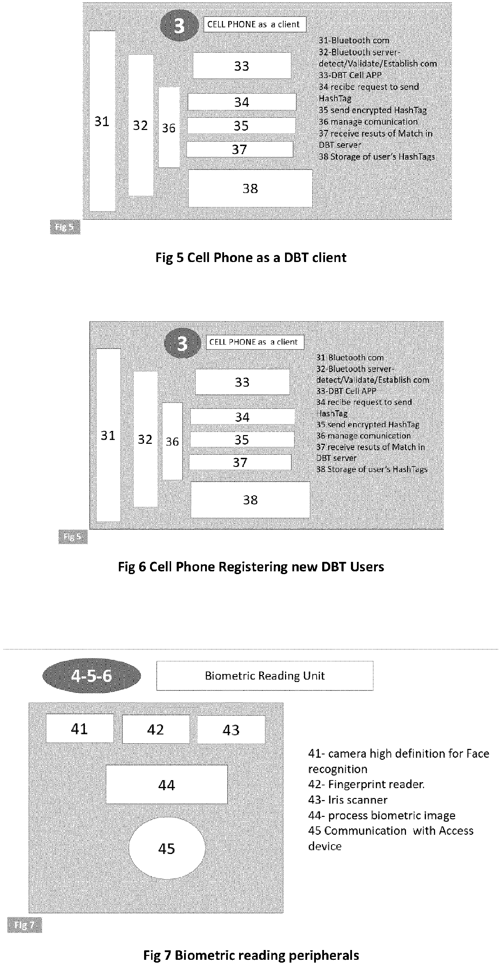

### FIG 5 CELL PHONE AS A DBT CLIENT

31- Bluetooth client module, the communication between client DBT and server DBT is done using Bluetooth profile DBT and Bluetooth BLE. Bluetooth BLE is used by DBT server and DBT client to detect each other then Bluetooth is used to establish a secure communication and send the ID HASHTAG to the DBT server.

32- This Module tasks are:
- To validate the server if the server is authorized to receive this specific User ID HashTag.
- To establish a secure communication Channel between server and client.
- To send User ID Hash Tag if requested by server.
- To receive authorization or denial to access the control unit from the server.

33- DBT Client APP this is the core app of the DBT client processing inputs outputs with DBT server.

34- Module managing the secure communication with the DBT server to confirm that the server access system is in the list of access authorized to this specific Client DBT.

35 - 36 Modules sending and controlling the ID HashTag of the client DBT.

37- Module receiving the Match results from the server.

38- Module in charge for the storage and protection of the ID user HashTag.

### FIG 6 CELL PHONE REGISTERING NEW DBT USERS

3-b Before the first utilization, DBT users have to register in the DBT Client application. This, one time, operation consists in the verification of the User ID, validation with User ID Document, and proof of identity using biometric algorithms to check photo captured with photo in the Citizen ID Document. After ID user validation an ID HashTag is generated and stored in the protected area of the user smartphone.

3b1- Module managing the cell phone graphic interface to assist user in the registering process.

3b2- Module in charge for the capture of User ID Document and User biometrics.

3b3- Module with algorithms to match the user biometrics captured with the camera with the biometrics present in the User ID Document.

3b4- Module used to generate the ID user HashTag.

3b5- Module to stream info with a BackOffice. When required a back office User ID validation this module establish a stream communication with external back Office.

3b6 - when the process is finished, if approved the user ID HashTag is stored in the smartphone memory.

3b7 When the process is finished all sensitive information used to validate the User ID is deleted.

### FIG 7 BIOMETRIC READING PERIPHERALS

4-5-6 Biometric Reading Units are the peripherals used to capture the biometrics of the user for the ID Verification process, there are different readers to capture different types of biometrics; Face, fingerprints, iris, palm etc...

41-42-43 different modules manage the capture and digitalization of different types of biometrics.

44 - The image captured is converted in a template compatible with the ID HashTag stored in the user cellphone. This template is unique and exclusive for each Citizen. A specific algorithm is then used to compare this template with the ID HashTag of the user the result will be then processed, and an authorization or denial to access will be conveyed to the access systems.

45- Module used to communicate with DBL server Module

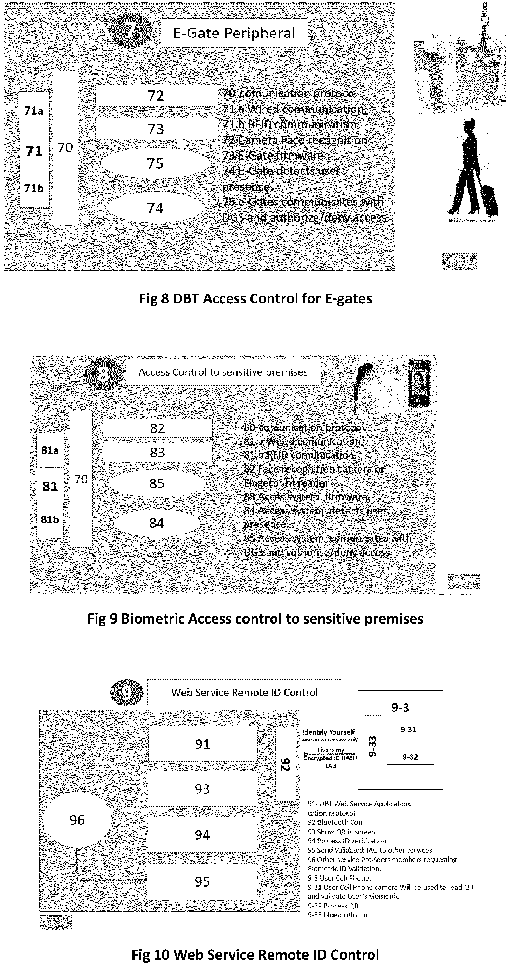

### FIG 8 DBT ACCESS CONTROL FOR E-GATES

7 - Using the DBT for Face recognition access control for boarding of passengers at airports.

70 - Modul to establish secure communication for communication with the DBT client smartphone.

71- Bluetooth or WIFI communication module to communicate with DBT client.

72- High-definition camera in the e-gate totem for face recognition.

73-74 The e-gate sensors detect the 'presence of passenger, activate the communication between DBT server and DBT client and process the validation of passenger

75- When the passenger ID is validated the boarding is processed controlling the passenger booking and his flight seat.

### FIG 9 BIOMETRIC ACCESS CONTROL TO SENSITIVE PREMISES

8 - Using the DBT to grant/Deny access to sensitive premises using Biometric ID Control.

80 - Modul to establish secure communication for communication with the DBT client smartphone.

81- Bluetooth or WIFI communication module to communicate with DBT client.

82- High-definition camera or other type of biometric reader for Biometric ID control.

83-84 Access device sensors detect the 'presence of passenger, activate the communication between DBT server and DBT client and process the validation of user.

85- When user ID is validate access is granted either by sending signal, wired or RFID to locker to give access.

### FIG 10 WEB SERVICE REMOTE ID CONTROL

9- DBT can also be used for remote biometric ID Validation. Remote ID validation is a major issue because it requires access to a central Biometric Data Base. The DBT invention eliminates this constraint as the validation is done with the ID HashTag stored in the User cellphone.

91 - A Web DBT application is available in web services members of DBT service. When user wants to access a web Service that requires ID Validation, if they are using DBT Service a web app is available to the user to do a biometric ID Validation.

93 - The DBT web Service displays a QR code in the screen

92 - The DBT client app in the cell Phone read the QR and a communication is established via WIFI or Bluetooth with the desktop APP.

9-3 User Cell phone with a DBT client app.

9-31 The user is invited by the desktop DBT app to make a selfie.

9-32 The ID HashTag stored in the DBT Client is sent together with the selfie to the desktop app by Bluetooth or wifi for match processing in module 94.

95- When the user ID is validated the user is granted access to the service requested.

## Claims

1. - Data Base Terminator Pat App EP22175043.3 - Biometric Citizen Identification, HANDS FREE without use of Data Bases see Fig1A
A computer solution that eliminates the need for databases and internet access when identifying a user through their biometric uniqueness, comprising:
(a) a wireless device carried by the user and
(b) a server device system with wireless features installed in any point of access control,
(c) the Said user do not have to register in any Database, neither public nor private,
(d) the said user keeps their sensitive data always in his control, in the said device with data wireless transmission that he carries in his pocket, or in his wrist, and
(e)the user's biometric and biographic data is encrypted and stored in the said device in a digital token ID,
(f) when the said device approaches the point of access control the said device of the user wakes and transmit the encrypted biometric data to the point of control,
(g) the point of control has the said server device system that compares the said encrypted biometric data of the said citizen with the biometric scanned data of the said citizen captured in the act of control to process a biometric match,
(h) the process is done in a totally automatic fashion. No action is required from him,
Whereby, users always keep control and custody of their biometric and sensitive data. No misuse of their information, no necessity to store their data in public or private Databases

## Amended claims

### Amended claims in accordance with Rule 137(2) EPC.

1. A DBT software Application, a software that can be loaded from any Smartphone app supplier to a mobile device type smartphone or smartwatch comprising:
a) A software fig 2 (11) to enroll the user in the application.
b) A software to detect any DBT Access Control device Fig 1A (3D) 1C in the vicinity fig 2 (13).
c) A register module with the profile of the user fig2 (12).
d) A sequence of codes, fig 2 (14) with encrypted biometric minutiae of the user and encrypted data containing user access rights.

2. An Access Control DBT app fig 1A (4D) comprising:
a) A processing device that invites registered users of claim 1 with a DBT smartphone app Fig2, to establish a communication with the DBT Server fig 1A (4D). In some embodiments a communication with claim 1 app is acknowledged, a token id with biometric information of the registered user is sent from claim1 to DBT access control app.
b) In some embodiments a Camera fig 1A (7D) receives the input from DBT access control DBT app fig1A [4D] to capture a video stream of the user approaching the said Access control DBT device Fig 1A (1D) & (3D).
c) In some embodiments the software in the DBT access control DBT app extracts the biometric Face's minutiae from the video stream of the user and compares them with the sequences of User's minutiae stored in the token ID fig2 (14) sent by the DBT app (Claim 1) to process a biometric authentication.

3. A Token ID with an encrypted string stored in Claim1 embodiment application comprising all or some of the embodiments described next:
a) Biometric minutiae and encoded information of unique characteristics of the user's face for Biometric authentication.
b) Encrypted User Identity, basic biographic information of user.
c) Time stamp, Registered date with encrypted code of the token, with a time validation.
d) Information specific to the access (example; Flight code, access rights... etc.)
e) Digital signature. Encrypted hashing of the information to assure originality and integrity of the Token ID

4. An embodiment of claim 1 that is listening to wireless broadcasting signals from embodiments of claim2 device. When approaching claim2, if the encrypted code is recognized and accepted by some embodiments of claim1 a request is sent to device of claim 2 to establish a wireless secure communication between device of claim1 and device of claim2, if the user of claim1 is an authorized user of device of claim2 a secure communication Channel type VPN (Virtual Private Network) is established.

5. An embodiment of claim2 captures a user's video stream and extracts unique specific biometric face minutiae of the user approaching the device.

6. An embodiment of claim 2 where at least one hardware processor compares the biometric ID minutiae's of the user in the token ID transmitted by Claim 1 with the biometric minutiae extracted from the video stream captured by claim 5.

7. An embodiment of Claim 6 where the device may feature the functionality of a physical access control controller and following user authentication may determine user authorization to pass to a controlled area.

8. A method to register user sensitive biometric data in an encrypted token ID in custody by the user. In some embodiments could be the user smartphone or smartwatch

9. A method where only encrypted data of the user is present in the DBT device.

10. A method where the biometric information of the user is encoded and encrypted in the smartphone and is impossible to reverse to the original image.

11. A method of biometric Identity Validation that:
• Works offline.
• No need to Access external Data Base.
• No need for Internet Access.
• Citizen Biometric Data are encrypted and custodied by the citizen in their smartphone all time.
